# EUROPÄISCHE PATENTSCHRIFT

(11) **EP 0 462 473 B1**
(45) Veröffentlichungstag und Bekanntmachung des Hinweises auf die Patenterteilung: **27.10.1993**
(21) Anmeldenummer: 91109410.0
(22) Anmeldetag: 08.06.1991
(51) Int. Cl.: B28B 1/00

(54) **Keramikformkörper mit Hohlkammern**
Moulded ceramic products with hollow cavities
Produits céramiques moulés avec cavités

(30) Priorität: 18.06.1990 DE 4019379; 19.09.1990 DE 4029651
(43) Veröffentlichungstag der Anmeldung: 27.12.1991
(73) Patentinhaber: Hoechst CeramTec Aktiengesellschaft, 95100 Selb (DE)
(72) Erfinder: Schnagl, Johann, W-8590 Marktredwitz (DE); Pöhlmann, Hermann, W-8591 Pechbrunn (DE)
(74) Vertreter: Spiess, Bernhard

(56) Entgegenhaltungen:
- DE-C- 749 345
- FR-A- 343 542
- GB-A- 855 561
- US-A- 2 652 520
- PATENT ABSTRACTS OF JAPAN, vol. 14, no. 432 (M-1026) (4375) 17. September 1990 & JP-A-2 171 203 (MATSUSHITA ELECTRIC WORKS LTD.) 2. Juli 1990

## Beschreibung

Das vorliegende Verfahren betrifft die Herstellung kompliziert geformter keramischer Hohlkörper aus einem grünen Formkörper, gemäß dem Oberbegriff des Anspruchs 1.

Nach bekannten Fertigungsverfahren werden keramische Hohlkörper durch Schlickerguß in Gipsformen hergestellt und diese nach dem Trocknen gebrannt. Auf diese Weise kann man zwar eine bestimmte Außenform herstellen, aber die Innenform ist wegen der nahezu konstanten Wanddicke weitgehend festgelegt.

Es bestand daher die Aufgabe, ein Verfahren zur Herstellung keramischer Hohlkörper zu finden, bei dem sich die innere Oberfläche und die äußere Oberfläche nahezu unabhängig voneinander festlegen lassen.

Aus der EP 232 048 ist bereits ein Verfahren bekannt, um bei einem transluzenten Keramikrohr einen Verschlußstopfen anzubringen. Hierzu wird zunächst ein grüner Rohrkörper aus keramischen Material hergestellt, dann ein Verschlußstopfen aus keramischem Material der gleichen Art, wobei beide Teile einen zylindrischen Oberfläche aufweisen, beide Teile werden ineinandergesteckt und gebrannt. Der Sinterschrumpf des rohrförmigen Materials soll größer sein als das Material für den Endverschlußstopfen. Es wird jedoch nicht Dieser unterschiedliche Sinterschrumpf wird durch Verwenden von Material mit unterschiedlicher spezifischer Oberfläche erhalten.

Davon ausgehend liegt der Erfindung die Aufgabe zugrunde, ein Verfahren anzugeben, bei dem gleicher Keramischer Material für beide Körper verwendet werden kann.

Die Lösung besteht darin, daß man für den umschließenden Formkörper eine geringere Preßdichte wählt als für den umschlossenen Formkörper.

Das erfindungsgemäße Verfahren ist anwendbar für alle keramischen Massen mit Anteilen an keramischen Bindern, die beim Sintervorgang einer Schrumpfung unterliegen. Bevorzugt sind Teile aus Aluminiumoxid.

Die Unterschiede der Gründichte der in einander gesteckten grünen Teile sind abhängig von der Rohdichte und vom Schwindungsverhalten der verwendeten keramischen Masse. Diese Unterschiede müssen von Fall zu Fall Masse spezifisch definiert werden. Beim erfindungsgemäßen Verfahren sintern die gepreßten Formkörper, die aufeinandergelegt oder ineinandergefügt werden, beim Brennprozeß zu einem monolithischen Körper zusammen.

Wegen der niedrigen Gründichte der umschließenden Aussenform entsteht im Sinterbrand eine definierte Vorspannung, die die ineinandergesteckten Teile zusammendrückt und zur Ausbildung eines monolithischen Körpers führt.

Die einzelnen zusammenzufügenden Teile werden ohne Verwendung eines Sinterhilfsmittels, beispielsweise einer Fritte, zusammengesteckt. Die Körper selbst können aber übliche Sinterhilfsmittel aufweisen, beispielsweise können grüne Aluminiumoxid-Körper Magnesiumoxid und/oder Zirkonoxid und grüne Siliziumnitrid-Körper noch Y₂O₃ enthalten.

Nach einer Ausgestaltung der Erfindung sind die hergestellten und ineinandergesteckten grünen Formkörper rotationssymmetrisch ausgebildet. Nach einer anderen Ausgestaltung weisen die grünen Formkörper die Form eines Vielecks, insbesondere eines regelmäßigen Vielecks auf. Dabei hat sich herausgestellt, daß sich die Teile umso leichter zu Monolithen verbinden, je mehr die Fügeform einem Kreis gleicht. Es ist bevorzugt, wenn die Vorsprünge der einander umschließenden Körper frei sind von konkaven Formabschnitten.

Nach dem erfindungsgemäßen Verfahren können auch abgeschlossene Hohlräume gebildet werden. Die Gase entweichen während des beginnenden Sinterbrandes. Vorteilhaft ist in diesem Fall ein langsames Aufheizen bis zur Sintertemperatur und/oder das Anbringen einer kleinen Öffnung.

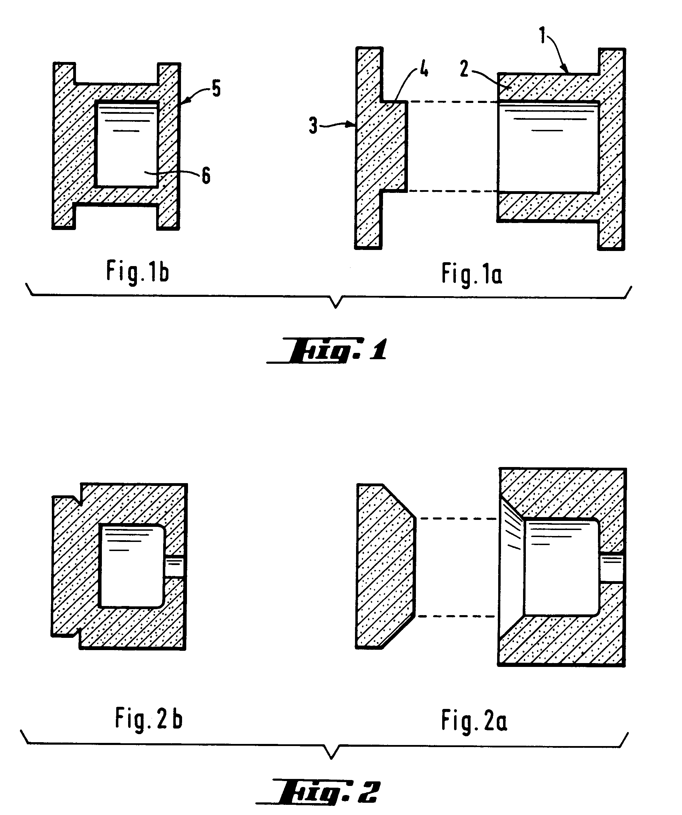

Die konstruktive Ausgestaltung der Erfindung wird durch die Figuren näher erläutert. In Figur 1a sind 2 grüne Körper 1 und 3 dargestellt. Das Teil 1 ist dosenförmig und weist den Rand 2 auf. Das Teil 3 ist deckelförmig und weist den inneren Vorsprung 4 auf. Nach Zusammenstecken der Teile 1 und 3 wird der innere Deckelteil 4 vom äußeren Rand 2 umschlossen. Die Gründichte des Teils 1 ist geringer als bei Teil 3. Nach Zusammenstecken und Sintern entsteht der gebrannte Formkörper 5 mit der Hohlkammer 6. (Fig. 1b)

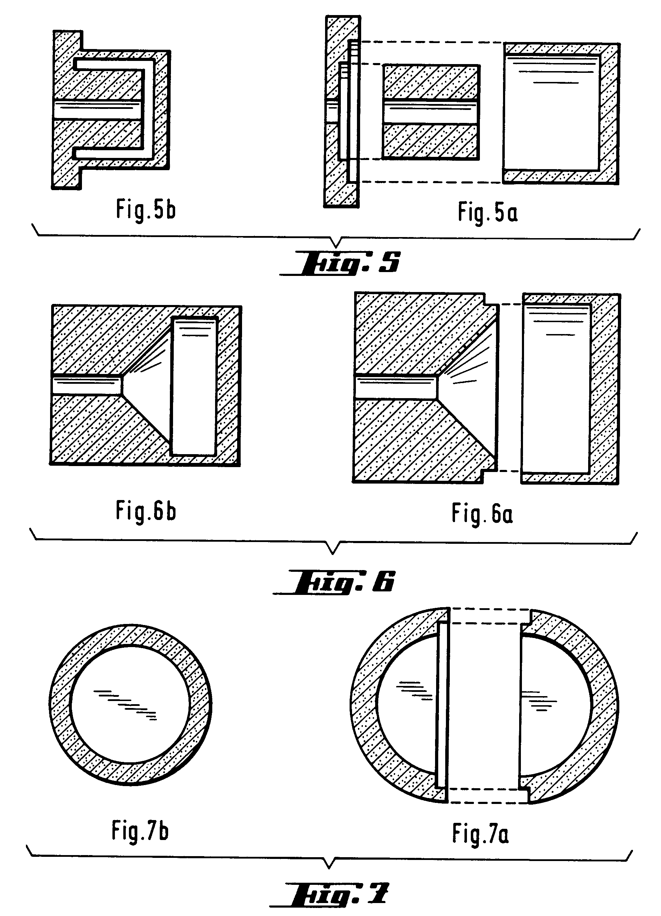

In den Figuren 1, 3 bis 7 weisen die umschließenden Formkörper einen ringförmigen Vorsprung auf. In Figur 2 schließen die Vorsprünge der beiden Formkörper einander wie Kegel und Hohlkegel.

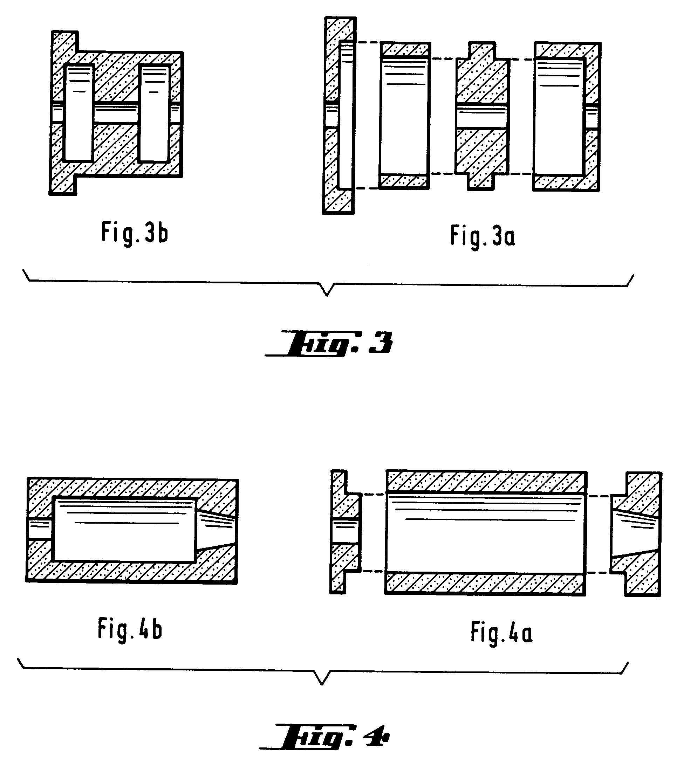

Wenn mehr als zwei Teile nacheinander über Vorsprünge unter Bildung des grünen Hohlkörpers ineinandergesteckt werden, wie in Fig. 3 bis 5 dargestellt, wird es erforderlich, daß mindestens ein Teil an zwei Seiten Vorsprünge aufweist. Es ist sinnvoll, diese Vorsprünge so zu konstruieren, daß sie beide die Vorsprünge ihrer Nachbarteile umschließen oder beide von diesen umschlossen werden. Dies gilt z.B. für das mittlere Teil beim Aufbau des Grünkörpers der Figur 4.

Beim erfindungsgemäßen Verfahren kann die Innen- und Außenform der einzelnen Teile entsprechend den preßtechnischen Gesetzmäßigkeiten nach den jeweiligen Funktionen der Teile in engen Toleranzen gefertigt werden. Die einzelnen Teile können auch im grünen Zustand spanabhebend nachbearbeitet werden.

### Beispiel

Eine pulverförmige keramische Preßmasse auf Basis Aluminiumoxyd ergibt bei einem bestimmten Stempeldruck ein grünes Zentrierteil (3) gemäß Figur 1 mit einem Durchmesser von 24 mm an der engsten Stelle und einer Gründichte von 2,4755 g/cm³. Nach dem Sintern beträgt der Durchmesser 20,00 mm, das sind 20 % Schwindung (bezogen auf den gesinterten Körper).

Damit die Teile 1 und 3 im Sinterbrand verschweißen, muß Teil 3 - wenn isoliert gebrannt - zu einem kleineren Innendurchmesser führen. Ein Unterschied von 0,01 mm ist ausreichend. Ein solches Teil 3 muß eine Schwindung von (24-19,99):19,99= 0,2006 oder 20,06 % aufweisen.

Im Bereich von 19-21 % Schwindung wurde an gepreßten Körpern der gleichen Preßmasse beobachtet, daß für jedes zusätzliche Prozent Schwindung die Dichte des Grünkörpers um 0,07 g/cm³ abnehmen muß. Daraus folgt, daß die Gründichte eines Teils 2,4755-(0,06x0,07) = 2,4713 (g/cm³| betragen muß, damit beide Teile verschweißen.

Das heißt, mit einem Gründichte-Unterschied von 0,0042 g/cm³ kann bei einem Nennmaß von 20 mm die gewünschte Vorspannung von 0,01 mm erreicht werden.

Zur Realisierung der geringeren Dichte kann man entweder den Preßdruck kontrolliert verringern, was technisch aufwendig ist, oder die Füllmenge der Hohlform mit Preßmasse bei konstantem Kolbenhub entsprechend verringern. Dabei ist eine zusätzliche Kontrolle der Dichte durch Messung der Rohabmessungen (Länge des Zylinders) und das Gewicht möglich.

Analog dazu kann mit anderen keramischen Massen, die eine bekannte Gründichte und eine bekannte Abhängigkeit des Schrumpfs von der Gründichte aufweisen, die beim Sinterbrand erzielte Vorspannung nach den spezifischen Anforderungen errechnet und eingestellt werden.

## Patentansprüche

1. Verfahren zur Herstellung eines keramischen Hohlkörpers aus einer grünen keramischen Masse durch Verpressen zu einem grünen Formkörper und Sintern, beidem man aus der gleichen keramischen Masse mindestens zwei grüne keramische Formkörper herstellt, die beide Vorsprünge aufweisen, wobei die Vorsprünge des einen Formkörpers nach Zusammenstecken die Vorsprünge des anderen Formkörpers umschließen und man die grünen Teile ineinandersteckt und weiterverarbeitet, dadurch gekennzeichnet, daß die Preßdichte des umschließenden Formkörpers geringer ist als die des umschlossenen Formkörpers.

2. Verfahren nach Anspruch 1, dadurch gekennzeichnet, daß die hergestellten grünen Formkörper rotationssymmetrisch sind.

3. Verfahren nach Anspruch 1 oder 2, dadurch gekennzeichnet, daß die Vorsprünge der beiden Formkörper einander wie Kegel und Hohlkegel umschließen.

4. Verfahren nach Anspruch 2, dadurch gekennzeichnet, daß der umschließende Formkörper einen ringförmigen Vorsprung aufweist.

5. Keramischer Hohlkörper hergestellt nach einem Verfahren gemäß Anspruch 1, dadurch gekennzeichnet, daß der grüne Körper als Aluminiumoxid-Körper Magnesiumoxid und/oder Zirkonoxid und als Siliziumnitrid-Körper noch Yttriumoxid enthält.

## Claims

1. A process for producing a ceramic hollow body from a green ceramic mass by pressing to give a green molding and by sintering, in which at least two green ceramic moldings, both of which have projections, are produced from the same ceramic mass, and the projections of one molding enclose the projections of the other molding after they have been fitted together, and the green parts are fitted into each other and further processed, wherein the pressed density of the enclosing molding is less than that of the enclosed molding.

2. The process as claimed in claim 1, wherein the green moldings produced are rotationally symmetrical.

3. The process as claimed in claim 1 or 2, wherein the projections of the two moldings enclose one another like cones and hollow cones.

4. The process as claimed in claim 2, wherein the enclosing molding has an annular projection.

5. A ceramic hollow body produced by a process as claimed in claim 1, wherein the green body as an alumina body contains magnesium oxide and/or zirconium oxide and as a silicon nitride body additionally contains yttrium oxide.

## Revendications

1. Procédé pour fabriquer un corps creux céramique à partir d'une masse céramique à vert par pressage pour former un corps moulé à vert et frittage, selon lequel à partir de la même masse céramique, on forme au moins deux corps moulés céramiques à vert, qui possèdent deux parties saillantes, les parties saillantes d'un corps moulé enserrant, après emboîtement, les parties saillantes de l'autre corps moulé et on emboîte l'une dans l'autre les parties à vert et on en poursuit le traitement, caractérisé en ce que la densité de pressage du corps moulé enveloppant est inférieure à celle du corps moulé enveloppé.

2. Procédé selon la revendication 1, caractérisé en ce que les corps moulés à vert fabriqués possèdent une symétrie de révolution.

3. Procédé selon la revendication 1 ou 2, caractérisé en ce que les parties saillantes des deux corps moulés s'entourent réciproquement à la manière d'un cône et d'un cône évidé.

4. Procédé selon la revendication 2, caractérisé en ce que le corps moulé enveloppant possède une partie saillante annulaire.

5. Corps creux céramique fabriqué conformément à un procédé selon la revendication 1, caractérisé en ce que le corps à vert, en tant que corps en oxyde d'aluminium, contient de l'oxyde de magnésium et/ou de l'oxyde de zirconium et, en tant que corps en nitrure de silicium, contient en outre de l'oxyde d'yttrium.
